# FASCICULE DE BREVET EUROPEEN

(11) **EP 1 344 186 B1**
(45) Date de publication et mention de la délivrance du brevet: **30.03.2005**
(21) Numéro de dépôt: 01993907.3
(22) Date de dépôt: 12.11.2001
(51) Int. Cl.: G06T 1/00

(54) **PROCEDE DE REPRESENTATION DE SCENES 3D EN REALITE VIRTUELLE ET DISPOSITIF CORRESPONDANT**
VERFAHREN UND VORRICHTUNG ZUR DARSTELLUNG DREIDIMENSIONALER SZENEN IN VIRTUELLER REALITÄT
METHOD FOR REPRESENTING THREE-DIMENSIONAL SCENES IN VIRTUAL REALITY AND CORRESPONDING DEVICE

(30) Priorité: 13.11.2000 FR 0014762
(43) Date de publication de la demande: 17.09.2003
(73) Titulaire: FRANCE TELECOM SA, 75015 Paris (FR); TELEDIFFUSION DE FRANCE S.A., 75732 Paris Cedex 15 (FR)
(72) Inventeur: LERAY, Pascal, F-35590 Saint Gilles (FR)
(74) Mandataire: Bentz, Jean-Paul
(86) Numéro de dépôt international: PCT/FR2001/003515
(87) Numéro de publication internationale: WO 2002/039382

(56) Documents cités:
- EP-A- 0 757 335
- WO-A-97/01241
- WO-A-98/58351
- FR-A- 2 791 793
- US-A- 5 396 583
- US-A- 5 764 276

## Description

La présente invention concerne un procédé et un dispositif de représentation d'une scène tridimensionnelle sur écran, dans laquelle un utilisateur peut se déplacer librement de manière virtuelle. L'invention trouve plus particulièrement son application pour la visualisation de sites, par exemple de sites touristiques ou de galeries marchandes, sur un ordinateur muni d'une carte graphique.

Plus précisément, l'invention concerne, selon un premier de ses aspects, un procédé de représentation d'une scène tridimensionnelle sur écran, dans laquelle un utilisateur peut se déplacer librement de manière virtuelle, comme défini dans le préambule de la revendication 1 ci-jointe.

Le document de brevet EP 0 757 335 décrit un procédé de représentation d'une scène tridimensionnelle, qui comporte la génération d'une texture d'une scène tridimensionnelle à partir de vues bidimensionnelles de cette dernière, l'application des textures sur un support géométrique tridimensionnel à l'aide d'un outil informatique de représentation tridimensionnelle, et l'affichage d'une image en fonction de l'orientation et de la position de l'utilisateur.

Les procédés de représentation de scènes tridimensionnelles (3D en abrégé) sur écran en réalité virtuelle actuellement sur le marché sont de deux types : les procédés de représentation de type Quicktime™ et les procédés de représentation basés sur une modélisation du contenu géométrique de la scène 3D.

Les procédés de représentation de type Quicktime™ consistent à réaliser des images de la scène 3D en pivotant autour d'un axe de référence de manière à obtenir une représentation globale de la scène 3D par rapport à cet axe de référence, puis à traiter ces images par un outil informatique de représentation 2D pour extraire et afficher l'image ou la portion d'image correspondant au champ de vision de l'utilisateur. Avec ce procédé, les déplacements en translation dans la scène 3D sont impossibles. Les déplacements vers l'avant et les déplacements à reculons consistent à effectuer respectivement un zoom de rapprochement et un zoom d'éloignement de l'image affichée à l'écran. Il en résulte que la résolution de la portion d'image affichée se dégrade au fur et à mesure que l'utilisateur s'éloigne en avançant de l'axe de référence à partir duquel ont été prises les images.

Les autres procédés de représentation 3D connus, et dont un exemple est donné dans le brevet US 5 396 583, consistent à modéliser le contenu géométrique de la scène 3D à représenter. Cette représentation est généralement très coûteuse en temps et en matériel. En effet, la modélisation du contenu géométrique de la scène requiert tout d'abord un long travail d'analyse des formes géométriques des éléments de la scène 3D par un graphiste spécialisé puis une saisie des résultats de cette analyse dans un outil informatique de représentation 3D appelée communément "browser" en langue anglaise. Lorsque la scène comporte de nombreux objets de forme géométrique complexe, l'outil informatique de représentation 3D doit par ailleurs disposer d'une importante puissance de calcul graphique pour obtenir un rendu réaliste de la scène sur, l'écran et pour permettre à l'utilisateur de se déplacer de manière virtuelle dans cette scène.

Un but de l'invention est de réaliser un procédé de représentation de scènes 3D sur écran permettant à l'utilisateur de se déplacer à l'intérieur de la scène dans toutes les directions.

Un autre but de l'invention est de réaliser un procédé de représentation de scènes 3D sur écran ayant une bonne qualité de représentation de la scène 3D quels que soient la position et l'axe de vision de l'utilisateur dans la scène.

Un autre but de l'invention est de réaliser un procédé de représentation de scènes 3D sur écran qui soit simple et rapide à mettre en oeuvre et qui soit peu onéreux.

A cette fin, le procédé de l'invention, par ailleurs conforme à la définition générique qu'en donne le préambule ci-dessus, est essentiellement caractérisé en ce que le support géométrique tridimensionnel créé dans l'outil informatique de représentation tridimensionnelle comporte des facettes sur chacune desquelles est appliquée une portion de l'une desdites au moins une texture au cours de l'étape (d) lesdites portions appliquées étant non recouvrantes entre elles et leur réunion formant intégralement l'une desdites au moins une texture.

Avantageusement, plusieurs textures différentes de ladite scène tridimensionnelle sont générées au cours de l'étape (b) . Elles sont par exemple générées à partir d'images tridimensionnelles prises en un point médian fixe de ladite scène tridimensionnelle avec des distances focales différentes. La texture appliquée sur le support géométrique tridimensionnel au cours de l'étape (d) est alors sélectionnée en fonction de la position de l'utilisateur par rapport à la partie de support géométrique tridimensionnel affichée à l'écran de manière à obtenir un rendu sur écran plus réaliste.

On peut également faire varier le nombre de facettes du support géométrique tridimensionnel en fonction de la position de l'utilisateur par rapport à la partie de support géométrique tridimensionnel affichée à l'écran pour améliorer encore le rendu sur écran.

Le procédé de l'invention peut aussi comprendre une opération consistant à modifier ou compléter la scène tridimensionnelle représentée sur écran en insérant des objets tridimensionnels virtuels dans le support géométrique tridimensionnel à l'aide de l'outil informatique de représentation tridimensionnelle.

L'invention concerne également un dispositif de représentation d'une scène tridimensionnelle sur écran
dans laquelle un utilisateur peut se déplacer librement de manière virtuelle, comme défini dans la revendication 10 ci-jointe. D'autres caractéristiques et avantages de l'invention apparaîtront à la lecture de la description détaillée qui suit et qui est faite en référence aux dessins annexés, parmi lesquels :
- la FIG.1 illustre un premier mode de réalisation du procédé de représentation 3D selon l'invention;
- la FIG. 2 montre un exemple de support géométrique tridimensionnel intervenant dans la mise en oeuvre du procédé de l'invention ; et
- la FIG.3 représente un dispositif permettant de mettre en oeuvre le procédé de l'invention.

Le principe du procédé de l'invention consiste à créer un objet ou support géométrique 3D, à plaquer une texture (à savoir des vues 2D) de la scène 3D sur ce support géométrique 3D, et à afficher à l'écran une image représentative d'une partie du support géométrique 3D en fonction de l'orientation et la position de l'utilisateur par rapport à cette partie de support. Pour se déplacer dans la scène 3D, l'utilisateur se déplace à l'intérieur du support géométrique 3D comme à l'intérieur de n'importe quel espace 3D virtuel.

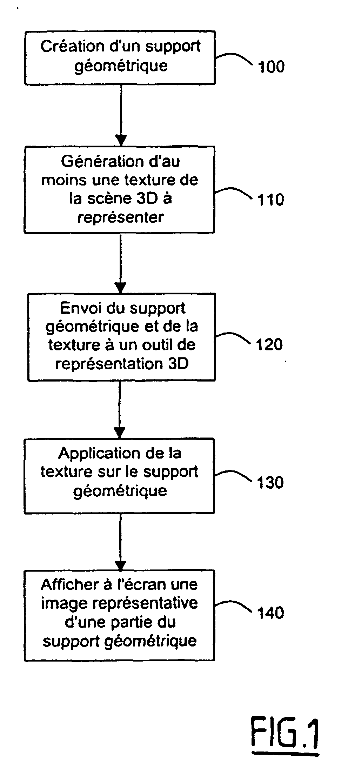

Un organigramme d'un premier mode de réalisation du procédé de l'invention est représenté à la FIG.1. La première étape référencée 100 consiste à définir un support géométrique 3D. Cette étape consiste à créer un fichier informatique définissant le nombre de polygones formant le support géométrique et les coordonnées (x,y,z) des sommets de chacun des polygones.

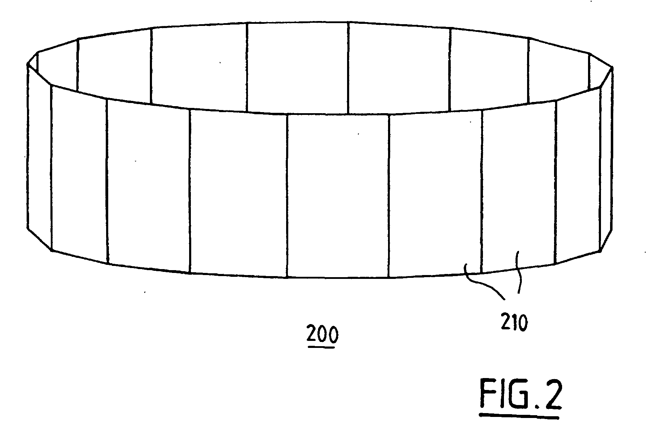

Le support géométrique 3D est par exemple un cylindre comme illustré à la FIG.2, ou une sphère, un rectangle, un cône, etc... Sur la figure 2, le cylindre référencé 200 est composé d'une pluralité de F facettes 210, lesquelles vont servir de supports à des vues 2D de la scène 3D à représenter. Dans l'exemple de la FIG.2, le cylindre comporte 18 facettes.

Dans une deuxième étape référencée 110, des vues 2D de la scène 3D sont générées. Ces vues forment la texture qui est appliquée sur les facettes (ou polygones) du support géométrique 3D. Dans le cas d'un support cylindrique, les vues 2D sont générées par exemple à partir d'une image panoramique de la scène 3D qui est découpée en F vues 2D.

Les fichiers informatiques résultant de ces deux étapes, à savoir le fichier définissant le support géométrique 3D et le fichier informatique définissant la texture de la scène 3D, sont ensuite fournis, au cours d'une étape référencée 120, à un outil informatique de représentation 3D ("browser" en langue anglaise), du type Cosmoplayer™ par exemple.

Au cours d'une étape référencée 130, les vues 2D de la scène sont appliquées sur les facettes du support géométrique 3D à l'aide d'un logiciel installé dans l'outil informatique de représentation 3D. Chaque vue 2D est appliquée sur une et une seule facette du support géométrique 3D et de manière non redondante de façon à obtenir une représentation globale de la scène 3D.

L'outil de représentation 3D va permettre à l'utilisateur de se déplacer dans le support géométrique 3D ainsi généré. Un algorithme de test géométrique est prévu pour empêcher l'utilisateur de sortir du support géométrique 3D.

La représentation sur écran de la scène 3D consiste ensuite à afficher à l'écran l'image de la partie de support géométrique 3D qui est dans le champ de vision de l'utilisateur. L'image affichée est donc fonction de l'orientation et de la position de l'utilisateur par rapport à cette partie de support géométrique 3D. Cette étape est référencée 140 dans l'organigramme de la FIG.2.

Les principaux avantages de ce procédé est qu'il est très simple et très rapide à mettre en oeuvre. Il peut notamment être très facilement mis en oeuvre sur des ordinateurs munis de cartes graphiques actuellement sur le marché.

Dans ce premier mode de réalisation, l'image affichée à l'écran est zoomée à mesure que l'utilisateur se rapproche du support géométrique 3D. Le rendu de la scène 3D sur écran n'est donc pas toujours très réaliste. L'utilisateur peut se déplacer toutefois dans toutes les directions dans les limites du support géométrique 3D.

Aussi, dans un second mode de réalisation, on propose de générer plusieurs textures différentes de la scène 3D et d'appliquer sur le support géométrique 3D la texture la plus appropriée en fonction de la position de l'utilisateur par rapport à la partie de support géométrique 3D qu'il regarde.

Les textures différentes sont par exemple générées à partir d'images bidimensionnelles prises en un point fixe médian de la scène 3D avec des distances focales différentes. Dans l'exemple du support cylindrique de la FIG.2, on peut par exemple générer N images panoramiques différentes de la scène et les découper chacune en F vues 2D. Un fichier de texture est alors généré pour chacune des images panoramiques.

La texture qui est appliquée sur le support géométrique 3D au cours de l'étape 130 est ensuite sélectionnée en fonction de la position de l'utilisateur par rapport à la partie de support géométrique 3D affichée à l'écran. Plus l'utilisateur est éloigné de la partie de support qu'il regarde, plus la distance focale associée à l'image 2D qui est appliquée sur le support géométrique 3D doit être faible.

Dans un autre mode de réalisation plus perfectionné, on peut envisager de faire varier également le nombre des facettes du support géométrique en fonction de la position de l'utilisateur par rapport à la partie de support géométrique 3D affichée à l'écran. Dans ce mode de réalisation, on prévoit d'utiliser un support géométrique 3D avec un nombre de facettes croissant au fur et à mesure que l'utilisateur se rapproche de la partie de support géométrique 3D qu'il regarde. Pour chaque forme de support géométrique 3D, il est alors prévu une pluralité de fichiers informatiques, chaque fichier informatique décrivant le support géométrique 3D avec un nombre de facettes donné. Bien entendu, il est également prévu au moins un fichier informatique de texture (plusieurs distances possibles) pour chaque fichier informatique de support géométrique.

Le procédé de l'invention peut être également valablement combiné avec un procédé de représentation de scènes 3D basé sur une modélisation du contenu géométrique de la scène 3D. En effet, les images affichées à l'écran étant des images d'un véritable objet 3D, il est possible de modifier ou de compléter la scène 3D en insérant des objets 3D à l'intérieur du support géométrique 3D.

Par exemple, pour représenter un monument très visité tel qu'une cathédrale au centre d'une ville, il est possible d'utiliser le procédé de l'invention pour représenter le paysage autour de la cathédrale et le procédé de représentation par modélisation du contenu sémantique pour représenter la cathédrale.

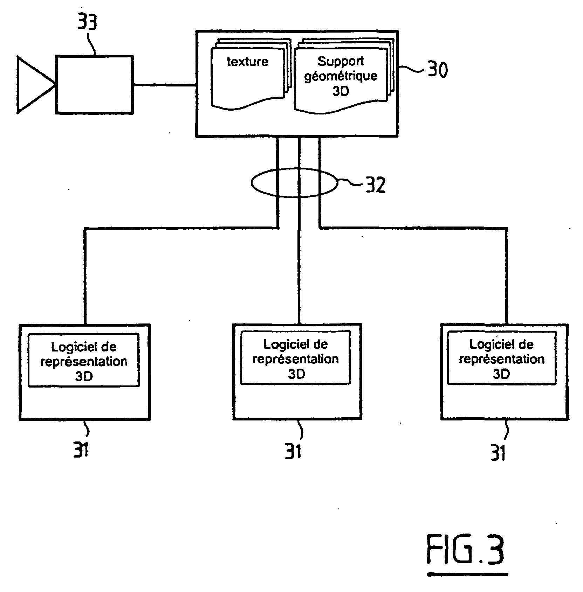

L'invention concerne également un dispositif permettant de mettre en oeuvre le procédé de l'invention. Le dispositif proposé à la FIG.3 comporte un serveur central 30 et une pluralité de terminaux distants 31 reliés au serveur central 30 par l'intermédiaire d'un réseau de communication 32. Le serveur central 30 comporte des moyens pour générer un ou plusieurs supports géométriques tridimensionnels pour la scène 3D à représenter. Le serveur central 30 comporte également des moyens pour générer au moins une texture de cette scène à partir de N images panoramiques produites par exemple par une caméra panoramique 33 connectée à celui-ci. Le serveur central comporte donc au moins un fichier de support géométrique 3D et un fichier de texture. Ces fichiers ou une partie de ceux-ci sont transmis aux terminaux 31 par l'intermédiaire du réseau de communication 32.

Chaque terminal 31 est par ailleurs muni d'un logiciel informatique de représentation 3D apte à sélectionner le support géométrique 3D et la texture à employer pour représenter la scène en fonction de l'orientation et de la position de l'utilisateur, à appliquer la texture sélectionnée sur le support géométrique 3D sélectionné et à afficher à l'écran une image représentative d'une partie du support géométrique 3D résultant en fonction de l'orientation et de la position virtuelle de l'utilisateur par rapport à cette partie de support géométrique 3D.

En variante, chaque terminal peut comporter en mémoire des fichiers de support géométrique afin de minimiser la quantité de données à transmettre à travers le réseau de communication 32. Seule une indication permettant d'identifier le support géométrique 3D à utiliser est transmise au terminal. Par exemple, une chaîne de caractères identifiant la forme du support géométrique 3D, le nombre de facettes formant celui-ci et leurs tailles (par exemple cylindre;18;taille1 dans le cas du cylindre illustré à la FIG.2 comportant 18 polygones de taille taille1) est envoyée au. terminal. Si le terminal ne comporte pas en mémoire le fichier de support géométrique 3D correspondant à la chaîne de caractères, il renvoie une requête au serveur central pour qu'il lui transmette ce fichier. Le terminal peut également comporter en mémoire des fichiers de texture.

Dans une version plus élaborée, on peut envisager transmettre au terminal uniquement des vues 2D de la scène 3D à représenter. Le terminal analyse ces vues, par exemple avec une méthode de détection des points d'intérêt, pour sélectionner un support géométrique 3D et une texture parmi les supports et textures mémorisés dans le terminal. Dans une version encore plus perfectionnée, l'analyse des vues 2D peut servir directement à déterminer la géométrie du support géométrique 3D à utiliser ainsi que la texture à appliquer sur chacune des facettes du support géométrique 3D.

## Revendications

1. Procédé de représentation d'une scène tridimensionnelle sur écran, dans laquelle un utilisateur peut se déplacer librement de manière virtuelle, ce procédé comprenant les étapes suivantes:
(a) créer un support géométrique tridimensionnel délimitant virtuellement ladite scène tridimensionnelle;
(b) générer au moins une texture de ladite scène tridimensionnelle à partir de vues bidimensionnelles de cette dernière;
(c) fournir ledit support géométrique tridimensionnel et ladite au moins une texture de ladite scène tridimensionnelle à un outil informatique de représentation tridimensionnelle;
(d) appliquer l'une desdites au moins une texture de ladite scène tridimensionnelle sur ledit support géométrique tridimensionnel à l'aide dudit outil informatique de représentation tridimensionnelle; et
(e) afficher à l'écran une image représentative d'une partie dudit support géométrique tridimensionnel en fonction de l'orientation et de la position dudit utilisateur par rapport à ladite partie de support géométrique tridimensionnel affichée à l'écran, **caractérisé en ce que** ledit support géométrique tridimensionnel comporte des facettes sur chacune desquelles est appliquée une portion de l'une desdites au moins une texture au cours de l'étape (d), lesdites portions appliquées étant non recouvrantes entre elles et leur réunion formant intégralement l'une desdites au moins une texture.

2. Procédé selon la revendication 1, **caractérisé en ce que** plusieurs textures différentes de ladite scène tridimensionnelle sont générées au cours de l'étape (b).

3. Procédé selon la revendication 2, **caractérisé en ce que** lesdites textures différentes sont générées à partir d'images bidimensionnelles prises en un point médian fixe de ladite scène tridimensionnelle avec des distances focales différentes.

4. Procédé selon la revendication 2 ou 3, **caractérisé en ce que** la texture appliquée sur ledit support géométrique tridimensionnel au cours de l'étape (d) est sélectionnée en fonction de la position dudit utilisateur par rapport à la partie de support géométrique tridimensionnel affichée à l'écran.

5. Procédé selon l'une quelconque des revendications 2 à 4, **caractérisé en ce que** ledit support géométrique tridimensionnel comporte un nombre fixe de facettes quelle que soit la position dudit utilisateur par rapport à la partie de support géométrique tridimensionnel affichée à l'écran.

6. Procédé selon la revendication 5, **caractérisé en ce que** le support géométrique tridimensionnel est un cylindre (200) comportant F facettes (210).

7. Procédé selon la revendication 6, **caractérisé en ce que** chaque texture de la scène tridimensionnelle générée au cours de l'étape (b) est une image panoramique segmentée en F images bidimensionnelles, chacune desdites F images bidimensionnelles étant appliquée au cours de l'étape (d) sur l'une des F facettes dudit cylindre.

8. Procédé selon l'une quelconque des revendications 2 à 4, **caractérisé en ce que** ledit support géométrique tridimensionnel comporte un nombre F de facettes variant en fonction de la position dudit utilisateur par rapport à la partie de support géométrique tridimensionnel affichée à l'écran.

9. Procédé selon l'une des revendications précédentes, **caractérisé en ce qu'**il comprend une opération consistant à modifier ou compléter ladite scène tridimensionnelle représentée sur écran en insérant un objet tridimensionnel ; virtuel dans ledit support géométrique, tridimensionnel à l'aide dudit outil informatique de représentation tridimensionnelle.

10. Dispositif de représentation d'une scène tridimensionnelle sur écran dans laquelle un utilisateur peut se déplacer librement de manière virtuelle, ce dispositif comprenant :
- des moyens pour créer un support géométrique tridimensionnel délimitant virtuellement ladite scène tridimensionnelle;
- des moyens de génération pour générer au moins une texture de ladite scène tridimensionnelle à partir de vues bidimensionnelles de cette dernière;
- des moyens d'application pour appliquer l'une desdites au moins une texture de ladite scène tridimensionnelle sur ledit support géométrique tridimensionnel; et
- des moyens d'affichage pour afficher à l'écran une image représentative d'une partie dudit support géométrique tridimensionnel en fonction de l'orientation et de la position dudit utilisateur par rapport à ladite partie de support géométrique tridimensionnel affichée à l'écran, **caractérisé en ce que** ledit support géométrique tridimensionnel comporte des facettes et **en ce que** les moyens d'application appliquent une portion de l'une desdites au moins une texture sur chacune desdites facettes, lesdites portions appliquées étant non recouvrantes entre elles et leur réunion formant intégralement l'une desdites au moins une texture.

11. Dispositif selon la revendication 10, **caractérisé en ce que** lesdits moyens de génération génèrent plusieurs textures différentes de ladite scène tridimensionnelle.

12. Dispositif selon l'une quelconque des revendications 10 et 11, **caractérisé en ce qu'**il comporte un serveur central comprenant les moyens pour créer ledit support géométrique tridimensionnel et les moyens pour générer ladite au moins une texture à partir de vues bidimensionnelles de ladite scène tridimensionnelle, et un réseau de communication pour transmettre ledit support géométrique et ladite au moins une texture vers des terminaux distants, chaque terminal comportant les moyens d'application pour appliquer l'une desdites au moins une texture de ladite scène tridimensionnelle sur ledit support géométrique tridimensionnel et les moyens pour afficher à l'écran une image représentative d'une partie dudit support géométrique tridimensionnel en fonction de l'orientation et de la position dudit utilisateur par rapport à ladite partie de support géométrique tridimensionnel affichée à l'écran.

13. Dispositif selon la revendication 12, **caractérisé en ce que** chaque terminal distant comporte une pluralité de supports géométriques tridimensionnels et/ou une pluralité de textures et **en ce que** le serveur central envoie au terminal distant une information pour lui indiquer le support géométrique tridimensionnel et/ou ladite au moins une texture à utiliser pour représenter ladite scène tridimensionnelle.

14. Dispositif selon la revendication 13, **caractérisé en ce que**, si le terminal distant ne comporte pas le support géométrique tridimensionnel et/ou ladite au moins une texture à utiliser pour représenter ladite scène tridimensionnelle, ledit terminal distant envoie une requête au serveur central pour que celui-ci lui envoie le support géométrique tridimensionnel et/ou ladite au moins une texture à utiliser.

15. Dispositif selon l'une quelconque des revendications 10 et 11, **caractérisé en ce qu'**il comporte un serveur central comprenant des moyens pour générer des vues bidimensionnelles de ladite scène tridimensionnelle et un réseau de communication pour transmettre lesdites vues bidimensionnelles vers des terminaux distants, chaque terminal comportant les moyens pour créer ledit support géométrique tridimensionnel et les moyens pour générer ladite au moins une texture à partir desdites vues bidimensionnelles, les moyens d'application pour appliquer l'une desdites au moins une texture de ladite scène tridimensionnelle sur ledit support géométrique tridimensionnel, et les moyens pour afficher à l'écran une image représentative d'une partie dudit support géométrique tridimensionnel en fonction de l'orientation et de la position dudit utilisateur par rapport à ladite partie de support géométrique tridimensionnel affichée à l'écran.

## Patentansprüche

1. Verfahren zur Darstellung einer dreidimensionalen Szene auf einem Bildschirm, in der sich ein Benutzer virtuell frei bewegen kann, wobei das Verfahren die folgenden Schritte umfaßt:
(a) Erzeugen eines dreidimensionalen geometrischen Trägers, der die dreidimensionale Szene virtuell abgrenzt;
(b) Erzeugen zumindest einer Textur der dreidimensionalen Szene ausgehend von zweidimensionalen Ansichten derselben;
(c) Zuführen des dreidimensionalen geometrischen Trägers und der zumindest einen Textur der dreidimensionalen Szene zu einem Informatikwerkzeug zur dreidimensionalen Darstellung;
(d) Anbringen der einen der zumindest einen Textur der dreidimensionalen Szene am dreidimensionalen geometrischen Träger mit Hilfe des Informatikwerkzeugs zur dreidimensionalen Darstellung; und
(e) Anzeigen auf dem Bildschirm eines einen Teil des dreidimensionalen geometrischen Trägers wiedergebenden Bildes in Abhängigkeit von der Orientierung und der Position des Benutzers im Verhältnis zum auf dem Bildschirm angezeigten Teil des dreidimensionalen geometrischen Trägers, **dadurch gekennzeichnet, daß** der dreidimensionale geometrische Träger Facetten aufweist, wobei im Verlauf des Schritts (d) auf jeder dieser ein Abschnitt der einen der zumindest einen Textur angebracht wird, wobei die angebrachten Abschnitte einander nicht überlappen und ihre Vereinigung vollständig die eine der zumindest einen Textur bildet.

2. Verfahren nach Anspruch 1, **dadurch gekennzeichnet, daß** mehrere unterschiedliche Texturen der dreidimensionalen Szene im Verlauf des Schrittes (b) erzeugt werden.

3. Verfahren nach Anspruch 2, **dadurch gekennzeichnet, daß** die unterschiedlichen Texturen ausgehend von zweidimensionalen Bildern erzeugt werden, die an einem festen Mittelpunkt der dreidimensionalen Szene mit unterschiedlichen fokalen Abständen aufgenommen wurden.

4. Verfahren nach Anspruch 2 oder 3, **dadurch gekennzeichnet, daß** die am dreidimensionalen geometrischen Träger im Verlauf des Schrittes (d) angebrachte Textur in Abhängigkeit von der Position des Benutzers im Verhältnis zum auf dem Bildschirm angezeigten Teil des dreidimensionalen geometrischen Trägers ausgewählt ist.

5. Verfahren nach einem der Ansprüche 2 bis 4, **dadurch gekennzeichnet, daß** der dreidimensionale geometrische Träger unabhängig von der Position des Benutzers im Verhältnis zum auf dem Bildschirm angezeigten Teil des dreidimensionalen geometrischen Trägers eine feste Zahl von Facetten aufweist.

6. Verfahren nach Anspruch 5, **dadurch gekennzeichnet, daß** der dreidimensionale geometrische Träger ein Zylinder (200) ist, der F Facetten (210) umfaßt.

7. Verfahren nach Anspruch 6, **dadurch gekennzeichnet, daß** jede Textur der im Verlauf des Schrittes (b) erzeugten dreidimensionalen Szene ein Panoramabild ist, das in F zweidimensionale Bilder geteilt ist, wobei im Verlauf des Schrittes (d) jedes der F zweidimensionalen Bilder an einer der F Facetten des Zylinders angebracht wird.

8. Verfahren nach einem der Ansprüche 2 bis 4, **dadurch gekennzeichnet, daß** der dreidimensionale geometrische Träger eine Anzahl F von Facetten aufweist, die sich in Abhängigkeit von der Position des Benutzers im Verhältnis zum auf dem Bildschirm angezeigten Teil des dreidimensionalen geometrischen Trägers ändert.

9. Verfahren nach einem der vorhergehenden Ansprüche, **dadurch gekennzeichnet, daß** es einen Prozeß umfaßt, der darin besteht, die auf dem Bildschirm wiedergegebene dreidimensionale Szene zu modifizieren oder zu vervollständigen, indem ein virtuelles dreidimensionales Objekt in den dreidimensionalen geometrischen Träger mit Hilfe des Informatikwerkzeugs zur dreidimensionalen Darstellung eingefugt wird.

10. Vorrichtung zur Darstellung einer dreidimensionalen Szene auf einem Bildschirm, in der sich ein Benutzer virtuell frei bewegen kann, wobei die Vorrichtung aufweist:
- Mittel zur Erzeugung eines dreidimensionalen geometrischen Trägers, der die dreidimensionale Szene virtuell abgrenzt;
- Erzeugungsmittel zur Erzeugung zumindest einer Textur der dreidimensionalen Szene ausgehend von zweidimensionalen Ansichten derselben;
- Anbringungsmittel zum Anbringen der einen der zumindest einen Textur der dreidimensionalen Szene am dreidimensionalen geometrischen Träger; und Anzeigemittel zur Anzeige eines einen Teil des dreidimensionalen Trägers wiedergebenden Bildes auf dem Bildschirm in Abhängigkeit von der Orientierung der Position des Benutzers im Verhältnis zum Teil des auf dem Bildschirm angezeigten dreidimensionalen geometrischen Trägers, **dadurch gekennzeichnet, daß**
der dreidimensionale geometrische Träger Facetten aufweist und daß die Anbringungsmittel einen Abschnitt der einen der zumindest einen Textur an jeder der Facetten anbringen, wobei die angebrachten Abschnitte einander nicht überlappen und ihre Vereinigung vollständig die eine der zumindest einen Textur bildet.

11. Vorrichtung nach Anspruch 10, **dadurch gekennzeichnet, daß** die Erzeugungsmittel mehrere unterschiedliche Texturen der dreidimensionalen Szene erzeugen.

12. Vorrichtung nach einem der Ansprüche 10 und 11, **dadurch gekennzeichnet, daß** sie einen zentralen Server aufweist, der die Mittel zur Erzeugung des dreidimensionalen geometrischen Trägers und die Mittel zur Erzeugung der zumindest einen Textur ausgehend von zweidimensionalen Ansichten der dreidimensionalen Szene und ein Kommunikationsnetz zur Übertragung des geometrischen Trägers und der zumindest einen Textur zu entfernten Terminals, wobei jeder Terminal die Anbringungsmittel aufweist, um die eine der zumindest einen Textur der dreidimensionalen Szene am dreidimensionalen geometrischen Träger anzubringen, und die Mittel aufweist, um auf dem Bildschirm ein einen Teil des dreidimensionalen geometrischen Trägers wiedergebendes Bild in Abhängigkeit von der Orientierung und der Position des Benutzers im Verhältnis zum Teil des auf dem Bildschirm angezeigten dreidimensionalen geometrischen Trägers anzuzeigen.

13. Vorrichtung nach Anspruch 12, **dadurch gekennzeichnet, daß** jeder entfernte Terminal eine Mehrzahl dreidimensionaler geometrischer Träger und / oder eine Mehrzahl von Texturen aufweist und daß der zentrale Server eine Information an den entfernten Terminal sendet, um diesem den dreidimensionalen geometrischen Träger und / oder die zumindest eine zur Darstellung der dreidimensionalen Szene zu verwendende Textur mitzuteilen.

14. Vorrichtung nach Anspruch 13, **dadurch gekennzeichnet, daß**, wenn der entfernte Terminal den dreidimensionalen geometrischen Träger und / oder die zumindest eine zur Darstellung der dreidimensionalen Szene zu verwendende Textur nicht aufweist, der entfernte Terminal eine Abfrage an den zentralen Server sendet, damit dieser ihm den dreidimensionalen geometrischen Träger und / oder die zumindest eine zu verwendende Textur sendet.

15. Vorrichtung nach Anspruch 10 oder 11, **dadurch gekennzeichnet, daß** sie einen zentralen Server aufweist, der Mittel zur Erzeugung zweidimensionaler Ansichten der dreidimensionalen Szene und ein Kommunikationsnetz aufweist, um die zweidimensionalen Ansichten zu entfernten Terminals zu übertragen, wobei jeder Terminal die Mittel, um den dreidimensionalen geometrischen Träger zu erzeugen, und die Mittel aufweist, um die zumindest eine Textur ausgehend von den zweidimensionalen Ansichten zu erzeugen, die Anbringungsmittel, um die eine der zumindest einen Textur der dreidimensionalen Szene am dreidimensionalen geometrischen Träger anzubringen, und die Mittel aufweist, um auf dem Bildschirm ein einen Teil des dreidimensionalen geometrischen Trägers darstellendes Bild in Abhängigkeit von der Orientierung und der Position des Benutzers im Verhältnis zum Teil des angezeigten dreidimensionalen geometrischen Trägers anzuzeigen.

## Claims

1. Method of representing a three-dimensional scene on screen, in which a user can move freely, in a virtual way, this method comprising the following steps:
(a) creating a three-dimensional geometrical support virtually delimiting said three-dimensional scene;
(b) generating one or more textures of said three-dimensional scene from two-dimensional views of the latter;
(c) supplying said three-dimensional geometrical support and said one or more textures of said three-dimensional scene to a three-dimensional representation computer tool;
(d) applying one of said one or more textures of said three-dimensional scene to said three-dimensional geometrical support using said three-dimensional representation computer tool; and
(e) displaying on screen an image representing a part of said three-dimensional geometrical support according to the orientation and the position of said user relative to said three-dimensional geometrical support part displayed on screen, **characterized in that** said three-dimensional geometrical support comprises facets on each of which is applied a portion of one of said one or more textures during the step (d), said applied portions being non-overlapping and their join fully forming one of said one or more textures.

2. Method according to Claim 1, **characterized in that** several different textures of said three-dimensional scene are generated during the step (b) .

3. Method according to Claim 2, **characterized in that** said different textures are generated from two-dimensional images taken at a fixed median point of said three-dimensional scene with different focal lengths.

4. Method according to Claim 2 or 3, **characterized in that** the texture applied to said three-dimensional geometrical support during the step (d) is selected according to the position of said user relative to the three-dimensional geometrical support part displayed on screen.

5. Method according to any one of Claims 2 to 4, **characterized in that** said three-dimensional geometrical support comprises a fixed number of facets irrespective of the position of said user relative to the three-dimensional geometrical support part displayed on screen.

6. Method according to Claim 5, **characterized in that** the three-dimensional geometrical support is a cylinder (200) comprising F facets (210).

7. Method according to Claim 6, **characterized in that** each texture of the three-dimensional scene generated during the step (b) is a panoramic image segmented into F two-dimensional images, each of said F two-dimensional images being applied during the step (d) to one of the F facets of said cylinder.

8. Method according to any one of Claims 2 to 4, **characterized in that** said three-dimensional geometrical support comprises a number F of facets varying according to the position of said user relative to the three-dimensional geometrical support part displayed on screen.

9. Method according to one of the preceding claims, **characterized in that** it comprises an operation consisting in modifying or complementing said three-dimensional scene represented on screen by inserting a virtual three-dimensional object in said three-dimensional geometrical support using said three-dimensional representation computer tool.

10. Device for representing a three-dimensional scene on screen in which a user can move freely in a virtual way, this device comprising:
- means for creating a three-dimensional geometrical support virtually delimiting said three-dimensional scene;
- generation means for generating one or more textures of said three-dimensional scene from two-dimensional views of the latter;
- application means for applying one of said one or more textures of said three-dimensional scene to said three-dimensional geometrical support; and
- display means for displaying on screen an image representing a part of said three-dimensional geometrical support according to the orientation and the position of said user relative to said three-dimensional geometrical support part displayed on screen, **characterized in that** said three-dimensional geometrical support comprises facets and **in that** the application means apply a portion of one of said one or more textures to each of said facets, said applied portions being non-overlapping and their join fully forming one of said one or more textures.

11. Device according to Claim 10, **characterized in that** said generation means generate several different textures of said three-dimensional scene.

12. Device according to either of Claims 10 and 11, **characterized in that** it comprises a central server comprising means for creating said three-dimensional geometrical support and means for generating said one or more textures from two-dimensional views of said three-dimensional scene, and a communication network for transmitting said geometrical support and said one or more textures to remote terminals, each terminal comprising application means for applying one of said one or more textures of said three-dimensional scene to said three-dimensional geometrical support and means for displaying on screen an image representing a part of said three-dimensional geometrical support according to the orientation and the position of said user relative to said three-dimensional geometrical support part displayed on screen.

13. Device according to Claim 12, **characterized in that** each remote terminal has a plurality of three-dimensional geometrical supports and/or a plurality of textures and **in that** the central server sends to the remote terminal information to indicate to it the three-dimensional geometrical support and/or said one or more textures to be used to represent said three-dimensional scene.

14. Device according to Claim 13, **characterized in that**, if the remote terminal does not include the three-dimensional geometrical support and/or said one or more textures to be used to represent said three-dimensional scene, said remote terminal sends a request to the central server so that it can send to the terminal the three-dimensional geometrical support and/or said one or more textures to be used.

15. Device according to either of Claims 10 and 11, **characterized in that** it comprises a central server comprising means for generating two-dimensional views of said three-dimensional scene and a communication network for transmitting said two-dimensional views to remote terminals, each terminal comprising means for creating said three-dimensional geometrical support and means for generating said one or more textures from said two-dimensional views, application means for applying one of said one or more textures of said three-dimensional scene to said three-dimensional geometrical support, and means for displaying on screen an image representing a part of said three-dimensional geometrical support according to the orientation and the position of said user relative to said three-dimensional geometrical support part displayed on screen.
